# EUROPEAN PATENT SPECIFICATION

(11) **EP 3 995 786 B1**
(45) Date of publication and mention of the grant of the patent: **27.09.2023**
(21) Application number: 21195800.4
(22) Date of filing: 09.09.2021
(51) Int. Cl.: G01D 5/244, G01D 5/347

(54) **CARRIER WITH SCALE FOR OPTICAL OR MAGNETIC LINEAR POSITION MEASUREMENT**
TEILUNGSTRÄGER MIT SKALA FÜR OPTISCHE ODER MAGNETISCHE LINEARPOSITIONSBESTIMMUNG
PORTE-ÉCHELLE POUR LA DÉTERMINATION OPTIQUE OU MAGNÉTIQUE DE LA POSITION LINÉAIRE

(30) Priority: 09.11.2020 IT 202000026708
(43) Date of publication of application: 11.05.2022
(73) Proprietor: Givi Misure S.r.l., 20054 Nova Milanese (IT)
(72) Inventor: GRASSI, Massimo, 20834 NOVA MILANESE (MB) (IT); GUERRA, Pierluigi, 20834 NOVA MILANESE (MB) (IT); VIGENTINI, Marco, 20834 NOVA MILANESE (MB) (IT)
(74) Representative: Faggioni, Marco

(56) References cited:
- GB-A- 1 442 165
- US-A- 5 842 283
- US-B1- 6 571 486

## Description

### FIELD OF THE INVENTION

The present invention refers to an optical or magnetic scale for linear measurements, also in a modular version for great length measurements, for applications on tool machines or on other types of machines.

### BACKGROUND OF THE PRIOR ART

As well known by those skilled in the art, "optical scale" or "magnetic scale" refer to an instrument for measuring linear movements. In particular, in tool machines - which represent their preferred and largest field of application - an optical or magnetic scale is used for measuring the linear movement of a moving part of a machine, usually named as 'machine carriage', along a guide integral with the fixed part of the machine, usually named as `machine structure' or `machine bed'. Based on the measurements detected by means of said optical or magnetic scale, the tool machine can perform precision machining on the workpieces. In the following reference will be made exclusively to optical scales, for the sake of brevity of description, although it is understood that the present invention is equally addressed to both types of scales, i.e., scales provided with a scale-grating to be optically detected or scales provided with a sequence of magnetic bands.

In the optical scales object of the present invention a scale-grating, engraved on a stainless-steel support, is housed within an extruded aluminium profile named "scale-holder". The scale-holder contains the scale-grating, protects it from any damage, and saves it from contamination and dirt coming from the external industrial environment wherein the optical scale is placed. The scale-grating consists in a sequence of markings suitably engraved in the support material, which markings are read and decoded by a moving optical reader placed on a reading slider integral with the machine carriage (but reversed solutions wherein the reading slider is integral with the machine guide, while the scale-holder is integral with the machine carriage are also known). Said optical reader essentially consists of a light source directed toward the scale-grating and one or more photosensors receiving the light reflected by said scale-grating.

The reading slider, dragged by the movement of the machine carriage, scans the scale-grating throughout its entire length and can very accurately detect its own movement thanks to the fact that the engraved markings of the scale-grating diffuse the incident light whereas the not-engraved areas between said markings reflect the same. The different response of the incident light on the diffusing/reflecting areas of the scale is detected by suitably adjusted photosensors housed in the reading slider, which photosensors generate a variable electrical signal. Such electrical signal is then decoded by a numerical control, by a position controller or by a digital readout, all of them being tools traditionally used in tool machines or in other types of machines for the production and/or the measurement of the workpieces.

To ensure extremely accurate measurements, particular attention should be paid to the thermal expansion of the materials used for making the optical scale components. Since these materials - steel for the scale-grating and aluminium for the scale-holder - have very different coefficients of thermal expansion, both said components of the optical scale should be free to independently release their own linear thermal expansion in order not to negatively affect the high accuracy of the scale-grating. In particular, the scale-grating should be completely free to expand/shrink as a function of its own coefficient of expansion and of the ambient temperature wherein the optical scale and the machine operate. As a matter of fact, the steel strip of the scale-grating support is similar to the material the machine is made of, and so the steel strip will expand in a way similar to the machine itself if it is not constrained to the scale-holder, the measurement deviations being so minimized and the production tolerances respected even when working at significantly different temperatures from that of 20°C at which, by convention, measures are referred. The scale-grating should therefore be free, i.e., not constrained in any way to the scale-holder wherein it is housed, supported, guided, and protected along its entire length.

The optical scale of the present invention can be made in a single piece, but modular scales are required when the optical scale is very long, so as to be able to ship it also by air where packages can only have a limited length (usually less than 3 m). Several optical scale modules should then be coupled and mutually tightened by screws at their opposite heads while inserting, in between, a gasket (linear O-ring) to ensure tightness. A continuous flexible steel strip, onto which the scale-grating is engraved, is then inserted into special seats provided in the modular optical scale. The steel strip forming a support of the scale-grating is as long as the mounted modular optical scale and can be easily rolled up for shipping, thus solving any freight problem.

Therefore, along the thus-assembled optical scale, multiple junction areas are formed between the various modules composing the same, which junction areas should not interfere with the correct reading of the scale-grating markings by the reading slider when the same slides along said scale-grating within the optical scale. This means that the reading slider must be able to continuously read the scale-grating, which extends - as seen - for the entire length of the various coupled modules of the optical scale, without being affected or altered in any way by the discontinuities at said junction areas of the scale-holder various modules. Although, in fact, such junctions are made with a good degree of precision, imperfect alignment problems can often occur while assembling the modules, especially when the scales are installed on not machined, or carpentry-made, or painted planes.

Finally, another critical point of the optical scales is that of ensuring a precise and constant spacing between the reading slider and the scale-grating, considering that the reading slider slides by means of micro bearings. Such micro bearings should thus ensure a correct and repeatable mutual positioning of the reading slider and the scale-grating, so that the electrical signal emitted by the reading slider can be stable and correctly adjusted, even in the presence of high travel speeds and/or quick accelerations/decelerations of the slider, which frequently occur in the operation of numerically controlled machines, especially in the junction areas of modular scales, where possible mechanical discontinuities may occur.

So far, substantially two different types of optical scales have been provided in the art, both in a single piece and in modular version, which differ from each other precisely in the way the slider slides. In a first type of optical scales, the micro bearings of the reading slider directly slide against the inner walls of the aluminium extruded sections forming the scale-holder. An optical scale of said first type is disclosed by US-5842283 wherein, in fact, the slider slides, by means of linear guides with recirculating ball bearings, on the external walls of the scale-holder, this latter being formed by a simple rail whose lateral walls form the rolling seats of said recirculating balls. On the other hand, other manufacturers provided a second type of optical scales, wherein, in addition to the steel strip bearing the scale-grating, a certain number of other continuous steel strips, acting precisely as sliding guides for the micro bearings of the reading slider, are provided within the scale-holder. There are then various other solutions wherein the two types of the above described guides of the reading slider are partially used. However, all these known solutions involve drawbacks which affect the optical scale correct operation, which drawbacks will be briefly illustrated below.

The first type of optical scales, wherein the micro bearings slide directly in contact with the walls of the scale-holder, is not a satisfactory solution because its performance does not last long. The continuous rolling of the hardened steel micro bearings on the scale-holder guide walls - which guide walls are made of aluminium and therefore have a hardness much lower than that of steel - causes, in fact, accelerated wear of the guide walls, with the formation over time of abrasions and grooves, and increase of the discontinuities at the junction areas of the various modules in the case of modular scales. The linear guides with recirculating ball bearings disclosed by US-5842283, in addition to involve a significantly higher construction cost of this device, just reduce the wear rate compared to the usual ball bearings, without however eliminating the wear of the scale-holder. The optical scale accuracy is therefore irreparably compromised, already after a short period of use, especially in numerical control machines, which are the largest component of the market, where the frequency, speed, and acceleration of the movements of the reading slider are very high.

The second type of optical scales illustrated above undoubtedly exhibits better quality features, since the micro bearings of the reading slider slide on guides also made of steel, and thus the wear problems of the first type of optical scales do not arise. However, the use of various steel strips - usually three - for forming a guide of the slider, results in higher cost, longer installation time, and greater difficulties in assembling the optical scale. Furthermore, the various steel strips need to have a fairly wide coupling tolerance within their respective longitudinal housing grooves formed along the entire length of the scale-holder, in order to be easily inserted therein, and this impairs the accuracy and repeatability of the measuring system. In particular, there may be problems at the junction areas of the modular scale modules, when these last cannot be perfectly aligned, where the reading slider can have an irregular and non-linear sliding (having to overcome hollows) with negative effects on the accuracy and repeatability of the measurement and on the proper functioning of the reading slider itself.

The problem addressed by the present invention is therefore that of offering an optical scale which allows to overcome the drawbacks of the two known types of scales described above, and particularly an optical scale having low cost combined with high accuracy and repeatability of measurement, and long service life.

Within this problem, a first object of the present invention is therefore to provide an improved optical scale wherein the reading slider guide allows excellent quality performance combined with a long life of the optical scale itself.

Another object of the present invention is to provide an optical scale having high performances combined with a more favourable cost than that of the optical scales of the second type described above, i.e., the optical scales wherein additional steel strips are used for the sliding of the reading slider.

A further object of the present invention is then to provide an optical scale, also in a modular version for measurements of great lengths, which is quicker and easier to be installed even by a non-specialized technical staff.

Finally, a last object of the present invention is to provide an optical scale wherein the mutual positioning of the reading slider and the scale-grating is particularly stable and repeatable throughout the entire useful length of the optical scale, even when the optical scale has a considerable length.

### SUMMARY OF THE INVENTION

This problem is solved, and these objects achieved by means of an optical scale having the features defined in claim 1. Other preferred features of said optical scale are defined in the secondary claims.

### BRIEF DESCRIPTION OF THE DRAWINGS

Further features and advantages of the optical scale according to the present invention will in any case become better evident from the following detailed description of a preferred embodiment thereof, provided purely by way of non-limiting example and illustrated in the attached drawings, wherein:
Fig. 1 is a perspective view of a module end of the optical scale according to the present invention, and of its relative steel strip supporting the scale-grating, in the mounting step thereof;

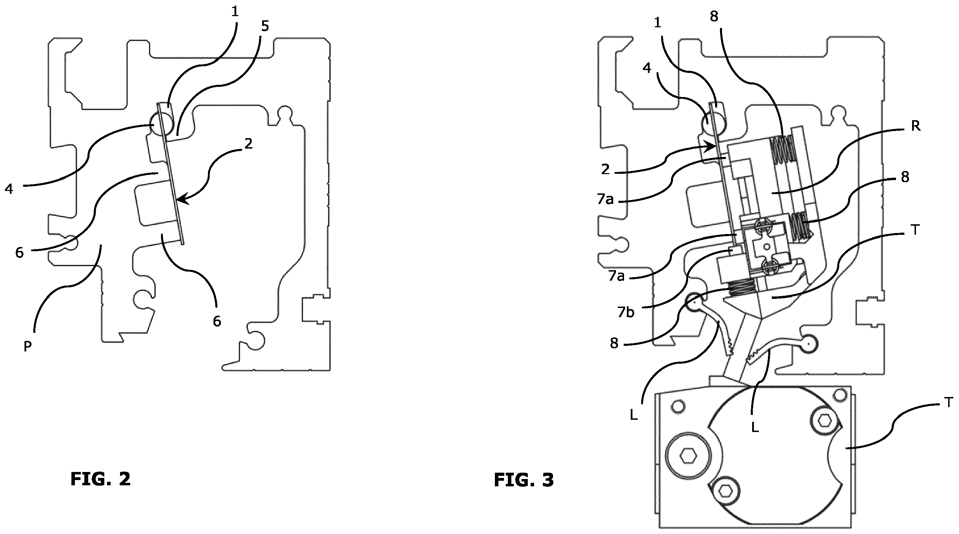

Fig. 2 is a cross-sectional view of the optical scale of the present invention and of its relative steel strip supporting the scale-grating; and
Fig. 3 is a cross-sectional view similar to Fig. 2 wherein is also shown the reading slider which slides on the steel strip bearing the scale-grating.

### DETAILED DESCRIPTION OF THE PREFERRED EMBODIMENT

According to the present invention, to solve the problem highlighted above by a structurally simple and highly effective solution, the inventors envisaged to use the same steel strip bearing the scale-grating as sliding guide for the reading slider. To make it possible such innovative concept, which allows to considerably simplify the structure and the assembly of the optical scale while maintaining all the advantages of a steel guide for the movement of the reading slider, a particular positioning and fastening system of the steel strip bearing the scale-grating has been designed, which system allows at least part of one of the two surfaces of said strip and one of its edges to be left unconstrained. The mechanical guide of the reading slider has been therefore achieved on said steel strip.

Therefore, the solution provided by the present invention consists in using a single, suitably sized and positioned steel strip within the scale-holder. The reading slider rests and slides by means of its own micro bearings both on the strip surface engraved by the succession of diffusing/reflective markings, and on one edge thereof. Therefore, the single steel strip acts, at the same time, both as a measuring system of the optical scale, since the diffusing/reflecting markings are directly engraved on one surface thereof, and as a mechanical guide for the reading slider.

The steel strip - which, at the same time, forms a guide for the reading slider and acts as a scale-grating provided with the diffusing/reflecting markings - should be inserted into each scale module, free from any constraint which could compromise its reading accuracy. It should also remain housed in its seat taking the correct attitude and always regaining the same attitude when the reading slider slides on the same, so as not to negatively interfere with the accuracy and repeatability of the measurement system. Therefore, a technical solution needed to be found which would allow the steel strip to be supported and guided in the manner described above, so that the reading slider could then freely slide thereon, devoid of any constraint and without any vertical or lateral support other than that offered by the steel strip itself.

### Sliding guide and reading system

Therefore, the solution embodied in the scale of the present invention consists in providing a groove 1, having an open circular cross-section and placed in the upper part of the extruded section which forms the scale-holder P, which groove is used for fastening therein the steel strip 2 bearing the scale-grating.

The groove 1 is directly formed in the extrusion process of the aluminium bars from which the modules of the optical scale are obtained and therefore does not involve any additional cost. Furthermore, the groove 1 is made with a precision within the extrusion tolerances of the aluminium bars, which are more than sufficient for the desired purposes of serving as a fastening means of the steel strip. As mentioned, the groove 1 is open on the side towards the inside of the scale-holder P, so that the steel strip 2 can be inserted therein, and it obviously longitudinally extends for the entire length of the various modules forming the optical scale. When the various modules of a modular optical scale are mutually assembled, the groove 1 extends for the entire assembly of modules forming the scale-holder P.

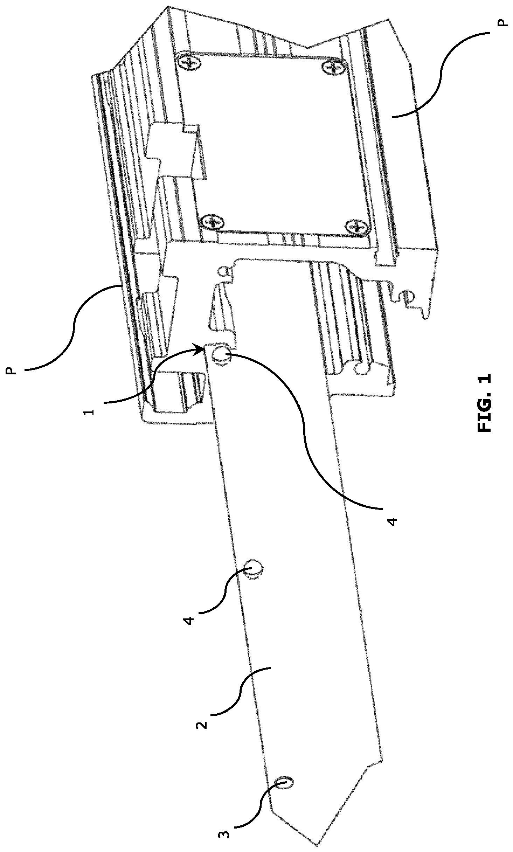

In proximity of a fastened edge of the steel strip 2, suitably spaced gauge holes 3 are then provided, wherein balls 4 made of steel, or of any other material consistent with the use described below, are inserted. The steel balls 4, which are the current preferred solution, can obviously be replaced by other retaining elements of different shapes - such as, e.g., cubes, cylinders, polygonal bars, and the like - suitable to constrain the fastened edge of the steel strip 2 within the groove 1, consistently adapting the cross-sectional shape of groove 1 and the shape of holes 3. When the steel strip 2 is laterally inserted into the scale-holder P already installed on the tool machine, as illustrated in Fig. 1, the balls 4 are positioned, in turn, into the holes 3; and when the steel strip 2 enters the scale-holder P, the balls 4 remain trapped within the groove 1, and the steel strip 2 too remains trapped with them, perfectly held in position by means of the interaction between the balls 4 and the circular cross-section groove 1. Alternatively, for an easier assembly, the balls 4 can be previously retained into the holes 3 by means of a mild mechanical deformation, to simplify the mounting operations of the steel strip 2 within the groove 1.

The steel strip 2 thus housed in the scale-holder P projects from the groove 1 through its longitudinal opening and is correctly positioned within the various modules forming the scale-holder P, in a univocal position determined by lateral rests, such as an upper rest 5 being part of the same wall of the scale-holder P which bounds the groove 1, and two spaced lower rests 6 which support instead the opposite surface of the steel strip 2 not bearing the scale-grating. The steel strip 2 is therefore kept in a very precise position in the crosswise directions but is completely free to move longitudinally, free from any limit or constraint thanks to the balls 4 sliding within the groove 1, so being able to completely release its own linear thermal expansions resulting from any change in the ambient temperature. The steel strip 2 is also provided with a moderate transverse play, allowed by the coupling of the balls 4 within the groove 1, so that it can always rest with its fastened edge against the bottom of the groove 1, thus always regaining the same position at each passage of the reading slider R thereon.

According to the main object of the present invention, the reading slider R, in fact, slides on the strip 2 by means of micro bearings and in particular first micro bearings 7a sliding on the same surface of the steel strip 2 bearing the scale-grating in two different positions at both sides of the scale-grating, and second micro bearings 7b sliding instead on a guide edge of the steel strip 2 opposite to its fastened edge. As a matter of fact, thanks to the above-described special type of assembly of the steel strip 2, its guide edge is completely devoid of constraints and can therefore act as a guide on which the micro bearings 7b can slide.

Moreover, the reading slider R, while moving, continuously pushes the steel strip 2 in the crosswise directions, always into the same position against the lower rests 6 and the bottom of the groove 1, by means of an elastic system consisting of springs 8 which thrust on the body of a slider drawer T, integral with the moving carriage of the tool machine. Accuracy and repeatability of the measurement are thus ensured, and the tolerances of assembly and alignment of the modules, in the case of modular scales, can be relatively wide without interfering with the accuracy and repeatability features of the optical scale.

Compliance with the assembly tolerances is not an aspect to be underestimated because the modular optical scales of the known type require assembly and alignment tolerances that installers fin it difficult to respect, especially in some types of machines whose structure is not robust and stable as it would otherwisw be necessary. It therefore often happens that an optical scale works satisfactorily when newly installed, but it begins to exhibit problems over time, as it settles down or ages, often due to the loss of the alignment of the various modules resulting in the reading system malfunction or the penetration of shavings, dirt, liquid or other matters such as dust, sawdust, vapours, etc. into the junction areas of the scale-holder modules. Benefiting from wide assembly and alignment tolerances which do not compromise the accuracy and repeatability of the measurement system is therefore undoubtedly the best guarantee of a good operation of the optical scale over time even under conditions of intense and/or heavy use.

### Scale-gratings

In the optical scale described above any known type of optical scales can be housed and used. To begin with, the scale-grating can be engraved with incremental markings with the possibility of having one or more selectable reference pulses placed at any point of the scale or spaced at constant pitch, or also reference pulses placed at a distance encoded in such a way that the numerical control can always know where it is and regain any position through a minimum movement of the machine. The scale-grating can also be engraved with a double trace of absolute type so that each position is unique, and the information sent to the numerical control is continuous and in real time even when high resolutions of the order of 100, 50 and even 10 nm or higher are required.

As an alternative to the optical scales mentioned above, incremental, or absolute magnetic bands can be used in the scale of the present invention, which offer the significant advantage of being much more protected against dirt, and insensitive thereto, so that they do not need the pressurization traditionally required in the optical scales for tool machines. Although magnetic scales offer a lower accuracy in respect of optical scales, a magnetic band scale still remain more than satisfactory for many uses such as in machines for processing sheet metal (e.g., laser-, plasma-, water jet-cutting, etc.), or other materials as aluminium, wood, glass, marble, or in operating machine and in automation in general.

So, in summary, the scale of the present invention can be made in four different types choosing between incremental or absolute, and optical or magnetic. The choice of the type to be used should be based on the desired precision and repeatability, the type of application and, obviously, the benefit-cost ratio of the chosen reading system.

### Fastening of the scale-grating

The scale-grating which, as said, is free to slide along the entire scale-holder P, is integrally fastened to the tool machine at both its ends. Since the steel strip is of the same material used for the tool machine, the scale-grating thermal expansions are congruent with those of the machine itself. The individual module(s) of the scale-holder P are fastened to the tool machine with dowel pins exerting an elastic crosswise thrust against the module(s), which thrust enables the module(s) to permanently rest onto the machine surface to which they are fastened, meanwhile leaving them free to longitudinally slide to release their own linear thermal expansions without interfering, as already said, with the free thermal expansion of the steel strip 2 bearing the scale-grating.

The plurality of modules which have the function of supporting the steel strip 2 bearing the scale-grating and protecting the same from the industrial environment wherein the scale is placed, forms the scale-holder P which ultimately acts, therefore, as a protective case. This is an airtight case on all sides except the one which allows the sliding of a slider drawer T which, from the outside of the optical scale, rigidly transmits the movement of the machine carriage to the reading slider R within the optical scale. The not-airtight case side is protected by lips L made of a special elastomeric material, which lips open and close at each passage of the slider drawer T. A suitable inner pressurization of the optical scale (unnecessary in the magnetic scales) renders airtight also the case side provided with the protective lips L, so that the optical scale could correctly work even if it were totally dipped in water. The compressed air, in fact, after passing through a filtering unit for its purification, dehumidification, and de-oiling, penetrates into the optical scale and possibly also into the slider drawer T through nozzles placed in one or both the scale end caps, making the scale completely airtight. The scale-grating and the reading slider R are in this case well protected from contamination and dirt, and their good operation is ensured.

The steel strip 2 bearing the scale-grating is directly fastened to the machine at one side and to a mechanical group named tensioner on the other side, such tensioner stretching the scale-grating elastically, allowing thus its adjustment. The scale-grating, in fact, is engraved "shorter", i.e., it is provided of more diffusing/reflecting areas than those necessary to provide the correct number of pulses per meter. By means of the tensioner operation the scale-grating is adjusted and the aforementioned diffusing/reflecting areas provide the number of adequate pulses per meter to impart the scale-grating its pre-set measurement accuracy. After the above said adjustment, the scale-grating is fastened also on the tensioner side and becomes integral with the machine, equally and simultaneously expanding and shrinking therewith, thus minimizing the temperature effects on the machine and the materials processed or measured thereby.

Based on the above considerations, the duration, accuracy, and repeatability features of the optical scale object of the present invention are strongly improved with respect to the current state of the art, and fully achieve all the desired objects of the invention.

In particular, the main advantages of the optical scale of the present invention are as follows:
a) Lower cost, easier assembly.
b) More regular sliding of the reading slider and more regular revolution of the micro bearings supporting the same.
c) Ideal mechanical sliding coupling for the reading slider: both the micro bearings and the sliding strip are, in fact, made of tempered stainless steel and thus such components are not mutually worn or damaged even after repeated, intense and/or heavy use.
d) No interference on the accuracy and repeatability of the measurement at the module junction areas. As a matter of fact, the reading slider slides on the steel strip bearing the scale-grating without even approaching the junction areas, also when the individual modules are wrongly assembled or fastened on inadequate support planes.
e) Wide alignment tolerances of the modules in the assembly step, where they can be placed in the correct mutual position by simply inserting reference pins as usual. The junction areas of the modules, in fact, do not negatively affect the measurement accuracy and repeatability as seen at point d) above.
f) Satisfactory operation of the reading slider and the scale, and high MTBF (mean time between failures).

However, it is understood that the invention should not be considered as limited to the particular arrangements illustrated above, which are only exemplary embodiments thereof, but that different variants are possible, all within the reach of a person skilled in the art, without thereby departing from the scope of protection of the invention itself, which is only defined by the following claims.

## Claims

1. Optical or magnetic scale configured for carrying out linear measurements, also of a great length, on a tool machine or on another type of machine, comprising a scale-holder (P) consisting of one or more modules which are mutually assembled and aligned on said machine, the scale-holder (P) comprising a continuous groove (1) and sliding guides within the scale-holder (P), the scale further comprising
a single steel strip (2) bearing the scale-grating and housed in said continuous groove (1) and a reading slider (R) which is configured to slide on said sliding guides within the scale-holder (P) to perform the reading of said scale-grating, wherein said sliding guides comprise the surface of the steel strip (2) bearing the scale-grating and a guide edge of said steel strip (2) configured to permit free longitudinal sliding of the reading slider (R) throughout the entire length of the steel strip (2).

2. Optical or magnetic scale according to claim 1, wherein said steel strip (2) is fastened to the scale-holder (P) in correspondence with said groove (1), said groove (1) having a predefined cross-section, into which a fastened edge of said steel strip (2), opposed to said guide edge, is housed and retained thanks to the interaction between the walls of said groove (1) and multiple retaining elements (4) housed within corresponding holes (3) formed in said steel strip in the proximity of its fastened edge, said retaining elements(4) having a shape and dimensions consistent with those of the predefined cross-section of said groove (1).

3. Optical or magnetic scale according to claim 2, wherein said retaining elements (4) have a moderate play within the respective housing groove (1), such moderate play being defined as sufficient to allow the fastened edge of the steel strip (2) to rest against the bottom of said groove (1).

4. Optical or magnetic scale according to claim 3, wherein said predefined cross-section of said groove (1) is an open circular cross-section and said retaining elements consist of balls (4).

5. Optical or magnetic scale according to claims 3 or 4, wherein the position of said steel strip (2) in an orthogonal direction with respect to the surfaces thereof is constrained by lateral rests (5, 6) which extend over the entire length of the scale.

6. Optical or magnetic scale according to any one of the preceding claims, wherein said reading slider (R) is configured to slide on said steel strip (2) by means of first micro bearings (7a) which slide on the same surface of the steel strip (2) bearing the scale-grating, in two different positions at both sides of the scale-grating, and second micro bearings (7b) which slide on said guide edge of the steel strip (2).

7. Optical or magnetic scale according to claim 5, further comprising a slider drawer (T) having a body, wherein said reading slider (R) is continuously pushed against the steel strip (2) in said orthogonal direction by an elastic system consisting of springs (8) which rest on the body of the slider drawer (T) so that, while moving, the reading slider (R) always pushes the steel strip (2) into the same lateral position against said lateral rests (6) and against the bottom of said groove (1).

## Patentansprüche

1. Optischer oder magnetischer Maßstab, der konfiguriert ist, um lineare Messungen, auch von großer Länge, an einer Werkzeugmaschine oder an einer anderen Art von Maschine durchzuführen, umfassend einen Maßstabshalter (P), der aus einem oder mehreren Modulen besteht, die gegenseitig an der Maschine montiert und ausgerichtet sind, wobei der Maßstabshalter (P) eine durchgehende Nut (1) und Gleitführungen innerhalb des Maßstabshalters (P) umfasst, wobei der Maßstab ferner ein einzelnes Stahlband (2), das das Maßstabsgitter trägt und in der durchgehenden Nut (1) untergebracht ist, und einen Leseschieber (R) umfasst, der konfiguriert ist, um auf den Gleitführungen innerhalb des Maßstabshalters (P) zu gleiten, um das Lesen des Maßstabgitters durchzuführen, wobei die Gleitführungen die Oberfläche des Stahlbands (2), das das Maßstabsgitter trägt, und eine Führungskante des Stahlbands (2) umfassen, die konfiguriert ist, um ein freies Längsgleiten des Leseschiebers (R) über die gesamte Länge des Stahlbands (2) zu ermöglichen.

2. Optischer oder magnetischer Maßstab nach Anspruch 1, wobei das Stahlband (2) am Maßstabshalter (P) in Übereinstimmung mit der Nut (1) befestigt ist, wobei die Nut (1) einen vordefinierten Querschnitt aufweist, in dem eine befestigte Kante des Stahlbands (2), die der Führungskante gegenüberliegt, dank der Wechselwirkung zwischen den Wänden der Nut (1) und mehreren Halteelementen (4) untergebracht und gehalten wird, die innerhalb entsprechender Löcher (3) untergebracht sind, die in dem Stahlband in der Nähe seiner befestigten Kante ausgebildet sind, wobei die Halteelemente (4) eine Form und Abmessungen aufweisen, die mit denen des vordefinierten Querschnitts der Nut (1) übereinstimmen.

3. Optischer oder magnetischer Maßstab nach Anspruch 2, wobei die Halteelemente (4) ein moderates Spiel innerhalb der jeweiligen Gehäusenut (1) aufweisen, wobei ein solches moderates Spiel als ausreichend definiert ist, um zu ermöglichen, dass die befestigte Kante des Stahlbands (2) am Boden der Nut (1) anliegt.

4. Optischer oder magnetischer Maßstab nach Anspruch 3, wobei der vordefinierte Querschnitt der Nut (1) ein offener kreisförmiger Querschnitt ist und die Halteelemente aus Kugeln (4) bestehen.

5. Optischer oder magnetischer Maßstab nach Anspruch 3 oder 4, wobei die Position des Stahlbands (2) in einer orthogonalen Richtung in Bezug auf die Oberflächen davon durch seitliche Auflagen (5, 6) eingeschränkt ist, die sich über die gesamte Länge des Maßstabs erstrecken.

6. Optischer oder magnetischer Maßstab nach einem der vorhergehenden Ansprüche, wobei der Leseschieber (R) konfiguriert ist, um auf dem Stahlband (2) mittels erster Mikrolager (7a), die auf derselben Oberfläche des Stahlbands (2) gleiten, das das Maßstabsgitter trägt, in zwei verschiedenen Positionen auf beiden Seiten des Maßstabsgitters zu gleiten, und zweite Mikrolager (7b), die auf der Führungskante des Stahlbands (2) gleiten.

7. Optischer oder magnetischer Maßstab nach Anspruch 5, ferner umfassend eine Schieberschublade (T) mit einem Körper, wobei der Leseschieber (R) kontinuierlich gegen das Stahlband (2) in der orthogonalen Richtung entlang eines elastischen Systems gedrückt wird, das aus Federn (8) besteht, die auf dem Körper der Schieberschublade (T) aufliegen, so dass der Leseschieber (R) während der Bewegung das Stahlband (2) immer in dieselbe seitliche Position gegen die seitlichen Auflagen (6) und gegen den Boden der Nut (1) drückt.

## Revendications

1. Échelle optique ou magnétique configurée pour effectuer des mesures linéaires, également d'une grande longueur, sur une machine-outil ou sur un autre type de machine, comportant un porte-échelle (P) constitué d'un ou plusieurs modules qui sont assemblés mutuellement et alignés sur ladite machine, le porte-échelle (P) comprenant une rainure continue (1) et des guides coulissants à l'intérieur du porte-échelle (P), l'échelle comprenant en outre une bande d'acier unique (2) portant la grille d'échelle et logée dans ladite rainure continue (1) et un curseur de lecture (R) qui est configuré pour coulisser sur lesdits guides coulissants à l'intérieur du porte-échelle (P) pour effectuer la lecture de ladite grille d'échelle, dans laquelle lesdits guides coulissants comprennent la surface de la bande d'acier (2) portant la grille d'échelle et un bord de guide de ladite bande d'acier (2) configuré pour permettre un coulissement longitudinal libre du curseur de lecture (R) sur toute la longueur de la bande d'acier (2).

2. Échelle optique ou magnétique selon la revendication 1, dans laquelle ladite bande d'acier (2) est fixée au porte-échelle (P) en correspondance avec ladite rainure (1), ladite rainure (1) ayant une section transversale prédéfinie, dans laquelle un bord fixé de ladite bande d'acier (2), opposé audit bord de guide, est logé et retenu grâce à l'interaction entre les parois de ladite rainure (1) et de multiples éléments de retenue (4) logés dans des trous correspondants (3) formés dans ladite bande d'acier à proximité de son bord fixé, lesdits éléments de retenue (4) ayant une forme et des dimensions compatibles avec celles de la section transversale prédéfinie de ladite rainure (1).

3. Échelle optique ou magnétique selon la revendication 2, dans laquelle lesdits éléments de retenue (4) ont un jeu modéré à l'intérieur de la rainure de logement respective (1), un tel jeu modéré étant défini comme étant suffisant pour permettre au bord fixé de la bande d'acier (2) de reposer contre le fond de ladite rainure (1).

4. Échelle optique ou magnétique selon la revendication 3, dans laquelle ladite section transversale prédéfinie de ladite rainure (1) est une section transversale circulaire ouverte et lesdits éléments de retenue sont constitués de billes (4).

5. Échelle optique ou magnétique selon les revendications 3 ou 4, dans laquelle la position de ladite bande d'acier (2) dans une direction orthogonale par rapport aux surfaces de celle-ci est contrainte par des supports latéraux (5,6) qui s'étendent sur la longueur entière de l'échelle.

6. Échelle optique ou magnétique selon l'une quelconque des revendications précédentes, dans laquelle ledit curseur de lecture (R) est configuré pour coulisser sur ladite bande d'acier (2) au moyen de premiers micro-paliers (7a) qui coulissent sur la même surface de la bande d'acier (2) portant la grille d'échelle, dans deux positions différentes sur les deux côtés de la grille d'échelle, et de seconds micro-paliers (7b) qui coulissent sur ledit bord de guide de la bande d'acier (2).

7. Balance optique ou magnétique selon la revendication 5, comprenant en outre un tiroir de curseur (T) ayant un corps, dans lequel ledit curseur de lecture (R) est continuellement poussé contre la bande d'acier (2) dans ladite direction orthogonale par un système élastique constitué de ressorts (8) qui reposent sur le corps du tiroir de curseur (T) de sorte que, tout en se déplaçant, le curseur de lecture (R) pousse toujours la bande d'acier (2) dans la même position latérale contre lesdits supports latéraux (6) et contre le fond de ladite rainure (1).
